# EUROPEAN PATENT SPECIFICATION

(11) **EP 0 848 898 B1**
(45) Date of publication and mention of the grant of the patent: **24.07.2002**
(21) Application number: 97203946.5
(22) Date of filing: 16.12.1997
(51) Int. Cl.: A01D 45/02

(54) **Plastic divider assembly with frame for a corn harvester**
Kunststoffhalmteiler mit Rahmen für Maiserntemaschine
Séparateur plastique à cadre pour moissonneuse de mais

(30) Priority: 17.12.1996 US 768762
(43) Date of publication of application: 24.06.1998
(73) Proprietor: NEW HOLLAND BELGIUM N.V., B-8210 Zedelgem (BE)
(72) Inventor: Hurlburt, Dale M., Landisville, PA 17538 (US); Rayfield, James F., New Holland, PA 17557 (US); Bich, Gary L., New Holland, PA 17557 (US)
(74) Representative: Vandenbroucke, Alberic

(56) References cited:
- EP-A- 0 091 635
- DE-A- 3 616 231
- FR-A- 2 596 609
- US-A- 4 329 835
- US-A- 4 446 682
- US-A- 4 493 181
- US-A- 4 538 404
- US-A- 5 195 309

## Description

This invention relates to the improvement of machines used in the harvesting of corn. More particularly, it relates to a crop row divider assembly on a corn header.

Mechanical harvesting of corn has taken place for decades. However, efforts continue to make corn harvest operations more efficient and effective. A corn harvester generally includes a corn header which removes the ears from the stalks. The ear of corn is then fed into a separator or thresher which separates the grains of corn from all other materials. A corn header actually consists of several row assemblies, one for each row which is being harvested in a single pass over the field. In order to ensure a smooth flow of corn and to protect the equipment under the corn header assembly there are several conically shaped dividers affixed to the corn header. Each divider passes between two rows of corn. Typically each divider covers a pair of stalkrolls, stripper plates, gathering chains and gear boxes. Besides protecting this processing equipment, a well-designed row divider will ensure a smooth flow of corn crop into the corn header. A good divider will also prevent corn loss. As the corn header moves forward, the corn plants in each row enter the channel for processing by the corn header and thresher.

Currently, there are several drawbacks to existing row dividers used on existing corn headers. First, friction between the corn and row divider can either slow the speed of the corn entering the corn header or damage the corn. This requires that the farmer operate the combine or harvester at slower speeds. Second, most row dividers are of a complex design. This complexity increases their weight and maintenance costs. Third, most dividers are difficult to raise or lower. Raising the dividers allow for the easy maintenance of the processing equipment or the easy transport the corn header. Because of the their length, most dividers need to be folded in order to allow the corn header to be effectively transported from field to field. Fourth, in the prior art, when the dividers are raised, the processing equipment beneath the divider is partially obstructed. This makes maintenance more difficult to accomplish. Fifth, metal dividers rust or bend, affecting the flow of crop into the corn header. Sixth, the colour on a metal divider can chip off making it difficult for the operator to correctly position the row divider between the rows of corn. Finally, in colder weather moisture will freeze to a metal divider and cause parts of the cornstalk to adhere to the divider.

The prior art illustrates these and additional difficulties. US-A-4,446,682 and FR-A-2 596 609 disclose an agricultural attachment for harvesting agricultural products growing in rows. This corn header uses a metal row divider which is capable of being tipped to allow for easier maintenance and transport. The divider hood is raised and the divider tip is pointed towards the ground. It is only possible to gain partial access to a single set of processing equipment. The access dilemma is quite noticeable when an entire row of dividers are raised. In that situation it is very difficult to gain access to the processing equipment located beneath the divider. The metal divider also results in a heavier, more complex corn header.

US-A-4,403,467 discloses a row divider with a flexible plastic sheath. The divider consists of two sub-frames covered by a flexible plastic sheath. The sub-frames may be expanded or contracted depending on the size of the gap between corn rows. The frames are designed to stretch or contract the plastic sheath. As a result, the frames are complex and add weight and maintenance complexity to the row dividers. Additionally, no provision has been made for reducing the length of the dividers for the transport of the corn header or for providing access to the processing equipment located beneath the divider for maintenance.

US-A-5,195,309 discloses a plastic crop divider for a row crop header. The divider consists of a semi-conical portion and a semi-cylindrical portion. Each portion consists of a double walled plastic shield and is hinged to the corn header frame. This divider has several drawbacks. The greatest drawback is the lack of any frame within the shields providing additional strength thereto. The double walled structure is subject to bending moments when it the header being pushed through the corn field. This bending moment is especially acute in the outer dividers and in the semi-conical portions. The disclosure attempts to overcome this deficiency by injecting foam into region between the double walls of the shield. Because of the double wall construction, the semi-conical shield lacks support at the base. To overcome this problem, the base is heavily reinforced. This increases the weight of the entire shield. This creates further design drawbacks. First, the semi-conical portion can be lifted, but cannot be moved entirely out of the way. This results in the divider covering, at least partially, the processing equipment making maintenance more complicated. Second, both the semi-cylindrical and heavy semi-conical portions must be lifted so as to prepare for maintenance or transport.

Consequently, the need exists for a light-weight, durable crop row divider which is also easy to move for maintenance or transport.

According to the invention a corn header for a corn harvester is provided, comprising:
a transverse beam carrying a header frame and a plurality of row units, each comprising a row unit frame; and
a divider assembly associated with said row units and comprising plastic shielding connected to said header frame or to the frames of said row units by pivot means, thereby enabling pivotment of said shielding between a lower, operating position and an upper, servicing position,
characterized in that
said plastic shielding is single walled and supported by support assemblies including said pivot means.

The plastic shielding provides a more durable row divider assembly. The smooth and relatively frictionless surface enhances an effective crop flow. The divider shields will not rust and no paint will chip therefrom.

The use of a single walled plastic reduces the full weight of the shields, which makes it easier to lift the shields for transport or in order to gain access to the processing equipment on a corn header. Meanwhile the support means provide strength to the movable shield portions. Such row divider assembly will retain its shape despite a large bending moment on the point shields.

The shielding may comprise an inner point shield, an inner island shield, an outer point shield and an outer island shield, supported by an inner point support assembly, an inner island support assembly, an outer point support assembly, and an outer island support assembly, respectively.

Appropriate pivot means may be provided between the inner point support assembly and the inner island support assembly on the one hand, and the inner island support assembly and the row unit frame on the other hand for providing a shield which, when lifted, does not obstruct the processing equipment in a corn header. This simplifies servicing operations.

Advantageously, means may be provided for adjusting the level of the lower, operating position of the shielding. The height of the inner point shield can be adjusted by an inner height assembly which is also attached to the row unit frame. The entire assembly can be rotated over the row unit frame and the corn header to allow an unobstructed view of the processing equipment in a row unit. The height of the outer point shield may also be adjusted by an outer height assembly which is also attached to the row unit frame. The outer point shield can prop open the outer island support assembly for transport or maintenance.

An embodiment of the present invention will now be described in further detail, by way of example, with reference to the following drawings, in which:
Figure 1 is a general view of a corn harvester combine with a corn header comprising dividers;
Figure 2 is an enlarged overhead view taken along line 2-2 of Figure 1 showing the left outer end divider assembly and an inner divider assembly;
Figure 3 is an enlarged sectional view taken along line 3-3 of Figure 2 showing the outer divider assembly;
Figure 4 is an enlarged sectional view taken along line 4-4 of Figure 2 showing the outer divider assembly with particular emphasis on the outer height assembly;
Figure 5 is an enlarged sectional view showing the outer point shield raised and the outer island shield raised;
Figure 6 is an enlarged sectional view taken along line 6-6 of Figure 5 showing the outer height assembly;
Figure 7 is an enlarged sectional view taken along line 7-7 of Figure 5 showing the outer point receptacle;
Figure 8 is an enlarged sectional view taken along line 8-8 of Figure 5 showing the outer point shield and the outer point support assembly;
Figure 9 is an enlarged sectional view taken along line 9-9 of Figure 2 showing the inner divider assembly;
Figure 10 is an enlarged sectional view showing the inner point shield in a raised position;
Figure 11 is an enlarged sectional view showing the inner island shield and inner point shield being rotated over the transverse beam;
Figure 12 is an enlarged sectional view taken along line 12-12 of Figure 11 showing the inner height assembly;
Figure 13 is an enlarged sectional view taken along line 13-13 of Figure 11 showing the inner point hinge and inner latch;
Figure 14 is an enlarged sectional view taken along line 14-14 of Figure 13 showing the inner island shield and inner island support assembly;
Figure 15 is an enlarged sectional view taken along line 15-15 of Figure 9 showing the inner island hinge pins; and
Figure 16 is an enlarged view showing the inner island support assembly removed from the inner island hinge pins.

Throughout the further description, left and right references are used as a matter of convenience and are determined by standing at the rear of the combine and facing the forward end in the normal direction of travel. Likewise, forward and rearward are determined by normal direction of travel of the combine. Upward or downward orientations are relative to the ground or operating surface.

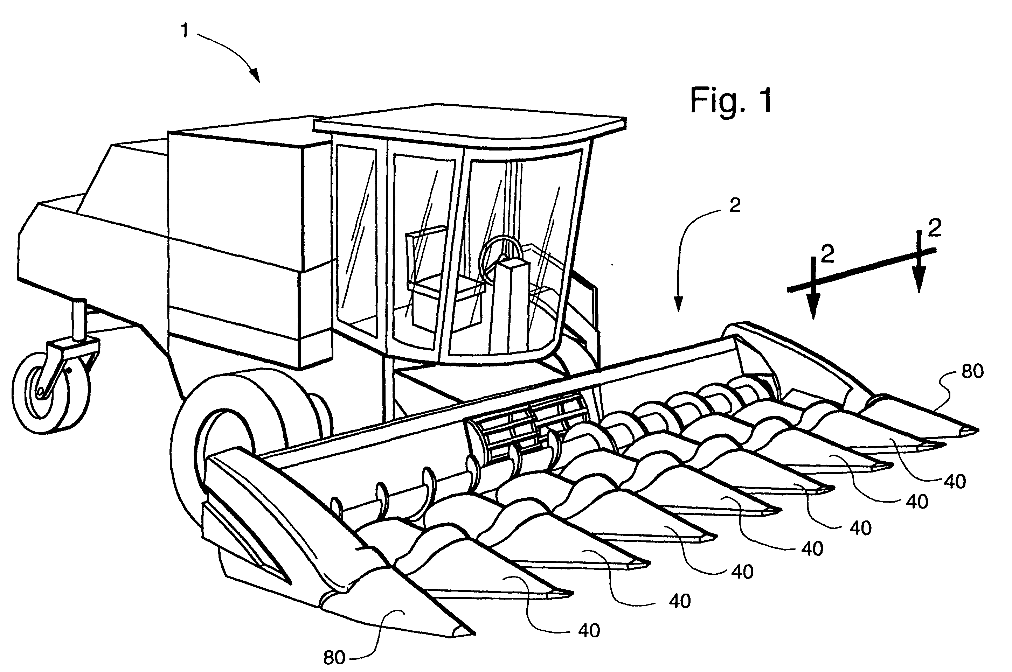

A divider assembly according to the invention is located on the corn header of a corn harvester or combine. Figure 1 illustrates a conventional combine 1, equipped with a corn header 2 attached by the feeder house or elevator to the combine 1. The header 2 comprises row dividers which are moved between rows of corn, while the corn stalks are drawn rearward by a front auger and then engaged by the stalkroll. Gathering chains feed the ear of corn backwards to a transverse auger. This auger moves the corn into the feeder house. The ears of corn are conveyed through the feeder house into a threshing system located in the combine 1. The corn kernels are separated from the ears by the threshing system and then conveyed into and temporarily stored in a grain tank located at the top of the combine 1. These threshed kernels are discharged later. The chaff or trash is discharged from the rear of the combine 1. An operator controls the combine 1 from a glass cab with a chair and steering column. From the cab, the operator can observe most of the functions of the corn header 2 and the combine 1.

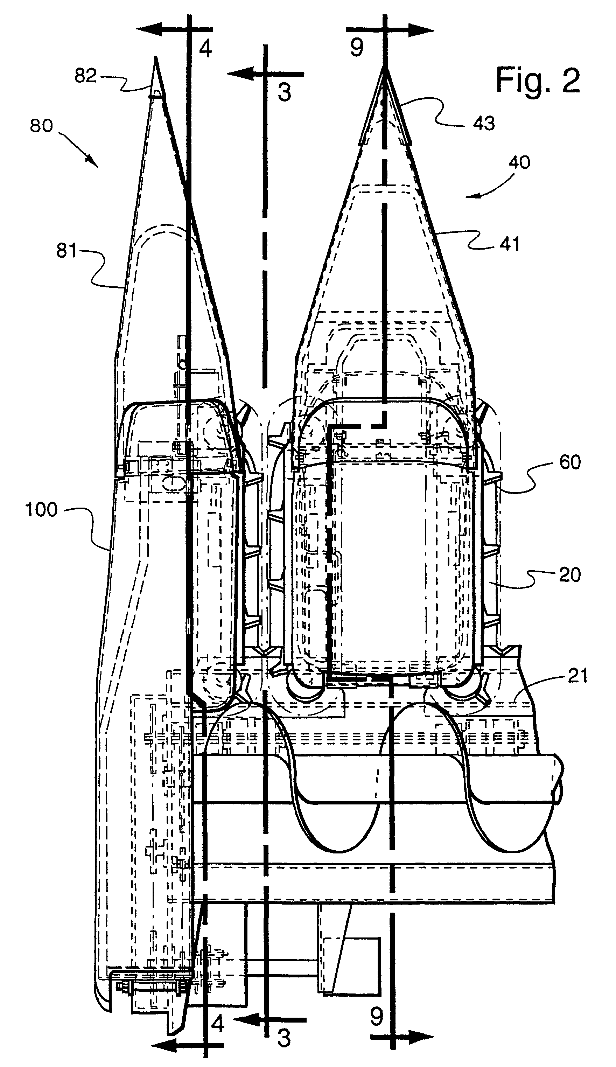

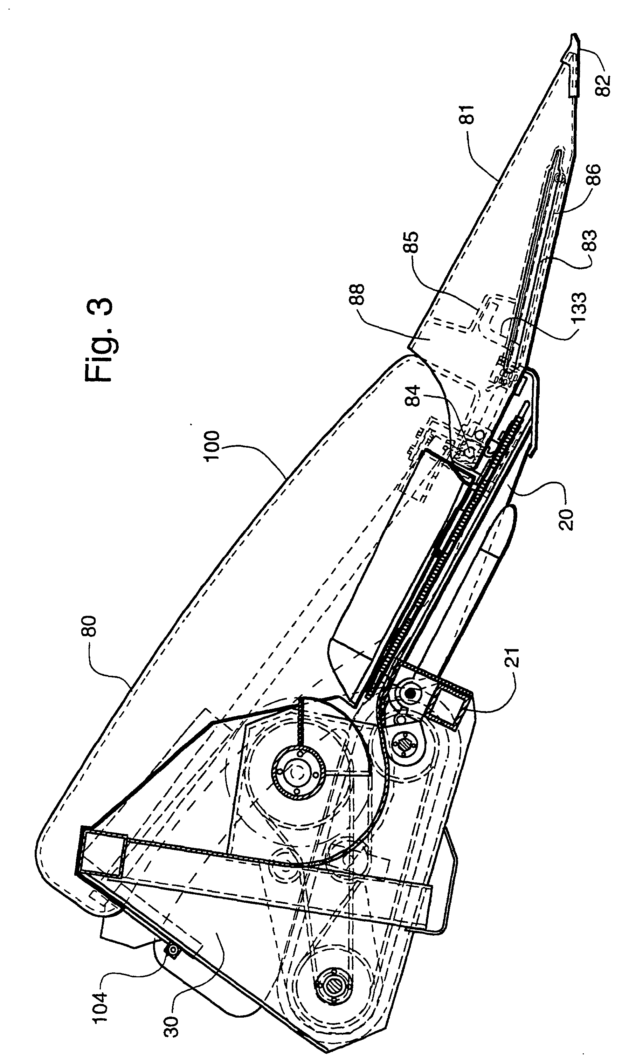

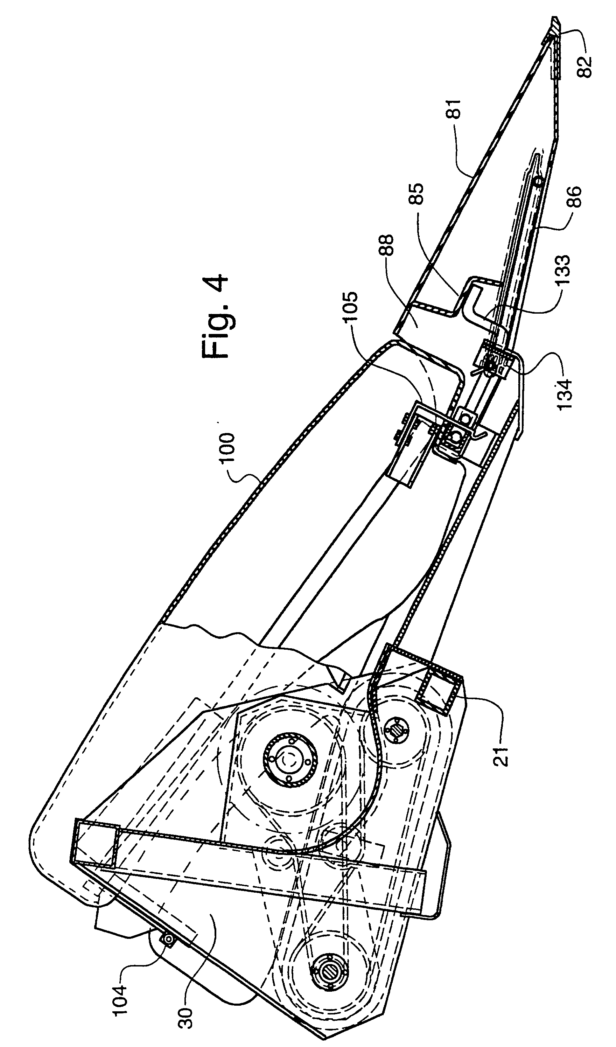

The dividers are located on the front of the corn header 2. The corn header 2 has a transverse beam 21 (Figure 2). Affixed to the transverse beam 21 are several row unit frames 20. Attached at opposite ends of the transverse beam 21 is the header frame 30 (Figures 3 and 4). Each row unit frame 20 typically supports the stalkrolls, stripper plates, gathering chains and gearboxes (hereafter referred to as corn header processing equipment). The header frame 30 typically supports the transverse auger and an auger drive system.

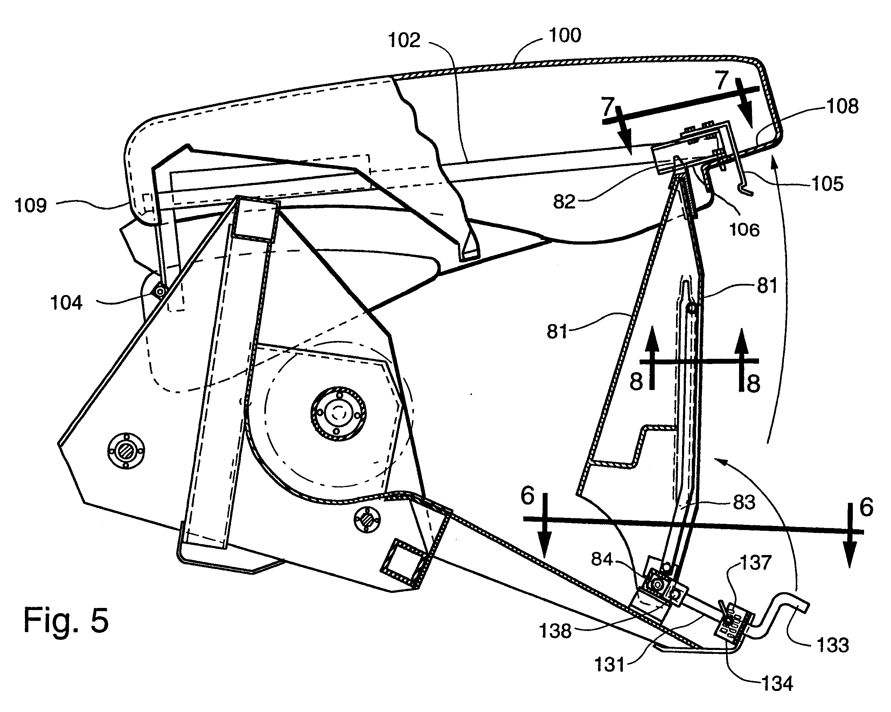

The plastic divider assembly typically comprises two outer divider assemblies 80, located at opposite ends of the corn header 2, and a plurality of inner divider assemblies 40 between the outer divider assemblies 80. Each outer divider assembly 80 comprises an outer point shield 81 supported by an outer point support assembly 83 (Figure 3). An outer island shield 100 is located behind the outer point shield 81. It is supported by an outer island support assembly 102. Controlling the height of the outer point shield 81 is an outer height assembly 131 (Figure 5).

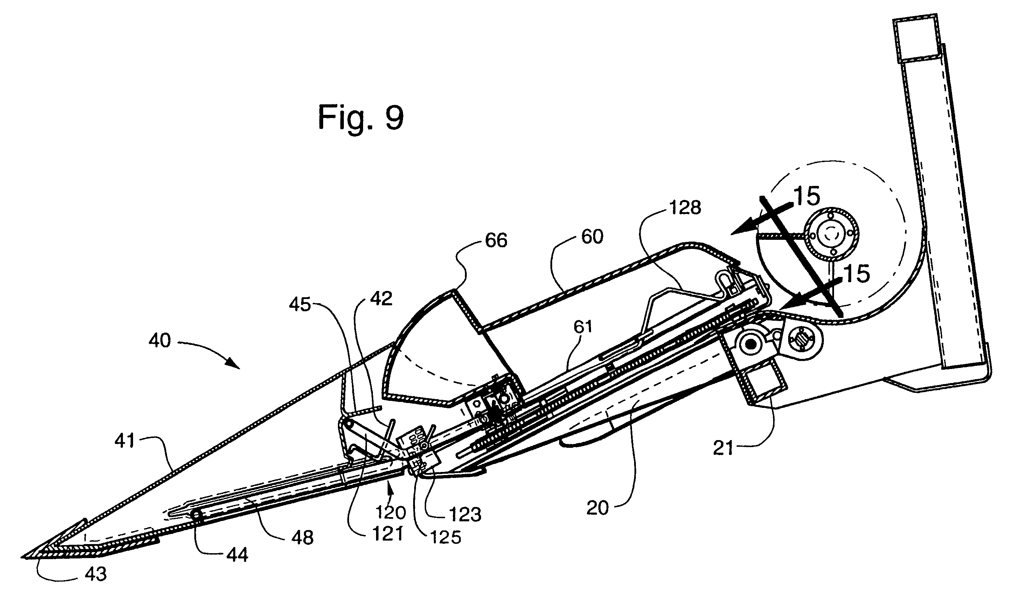

Each inner divider assembly 40 comprises an inner point shield 41 supported by an inner point support assembly 44 (Figure 9). Behind the inner point shield 41 is an inner island shield 60, which is supported by the inner island support assembly 61. Controlling the height of the inner point shield 60 is an inner height assembly 120 (Figure 9). The inner divider assembly 40 can be rotated over the corn header 2 revealing the row unit frame 20 below.

The outer divider assembly 80 consists of five major elements: the outer point shield 81, the outer point support assembly 83, the outer island shield 100, the outer island support assembly 102 and the outer height assembly 131 (Figures 3-5).

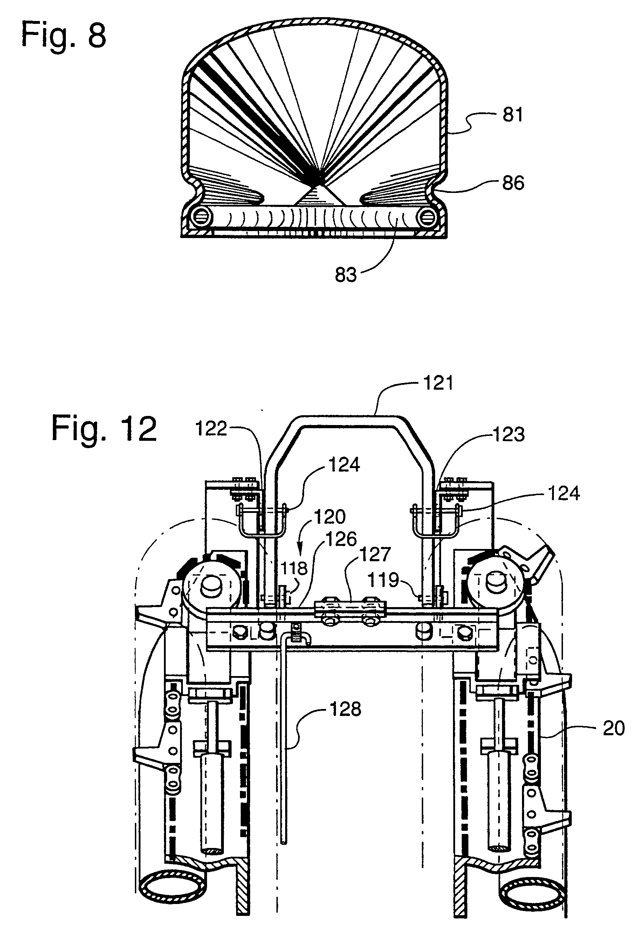

The outer point shield 81 is a semi-conical shield located at the front of the outer divider assembly 80. The shield is a rotationally moulded plastic that is single walled. The shield 81 has an outer point 82 which may be reinforced with a metal tip. An outer point channel 86 is moulded into the shield for receiving the outer point support assembly 83 (Figures 3 and 8). The base 88 of the outer point shield 81 has an outer point rest 85 equally moulded into the shield (Figure 4).

The outer point support assembly 83 comprises a triangularly shaped frame with a pair of hinges 84 for attachment of the support assembly to the row unit frame 20 (Figure 3). Hence, the outer point support assembly 83 is capable of pivoting relative to the row unit. If desired, additional reinforcements to the outer point shield 81 may be mounted to the support assembly 83 to facilitate harvesting operations in a very harsh environment.

The outer island shield 100 is located behind the outer point shield 81. The left outer island shield 100 shown in Figures 3-5 has a matching right outer shield. Both shields are identical, mirror images containing similar elements. The outer island shield 100 is made of rotationally moulded and single walled plastic. It has a forward portion 108 and a rear portion 109. An ear saver to prevent corn from falling into the outer point base 88 may be affixed to the outer island shield 100.

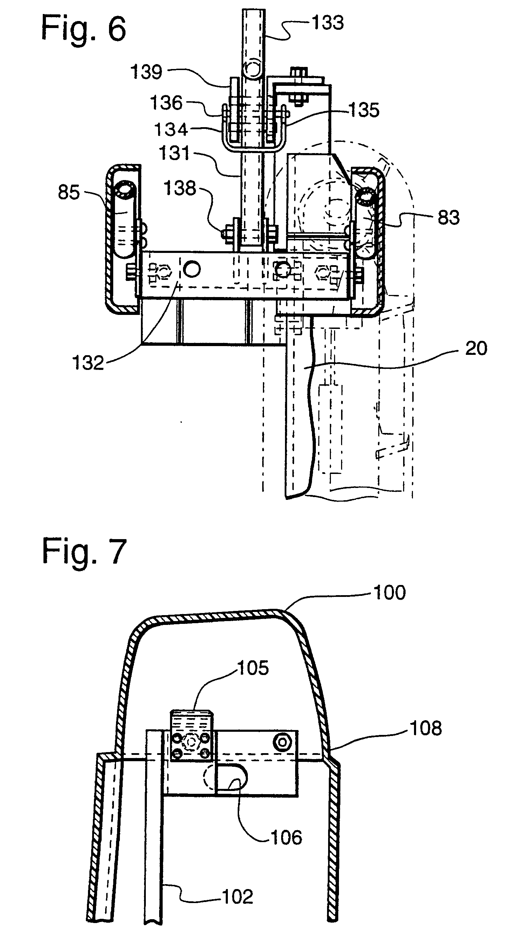

The outer island support assembly 102 comprises a single bar that supports the outer island shield 100. Like the outer island shield 100, the left outer island support assembly 102 has a matching right outer support assembly. Both support assemblies are identical mirror images containing similar elements. The outer island support assembly 102 comprises a header frame hinge 104, an outer latch 105 and an outer point receptacle 106 (Figures 5 and 7). The header frame hinge 104 is connected to and pivots about the header frame 30. The outer latch 105 latches onto the outer height assembly 131. The outer latch 105 holds the outer island support assembly 102 and shield 100 down during harvesting operations. The outer point receptacle 106 is located at the end of the support assembly 102 furthest from the header frame hinge 104. This receptacle 106 can receive the outer point 82 during maintenance or transport of the corn header 2 (Figure 5).

The outer height assembly 131 controls the height of the outer point 82. It can be used to raise or lower the level of the outer point 82 relative to the ground. The outer height assembly 131 comprises an outer bracket support 132, which is affixed to the row unit frame 20, shown in Figure 6. Attached to the outer bracket support 132 is an outer pivot pin 138. An outer height bar 133 is attached at one end to this pivot pin 138, which will allow pivotment of the outer height bar 133. Also a left outer bracket 134 (mirror image right outer bracket is item 135) is affixed to the row unit frame 20, forward of the outer bracket support 132. Each outer bracket 134 and 135 has several position holes 137 as can be seen in Figure 5. A retaining pin 136 is inserted into one of the positioning holes 137 on the left outer bracket 134. The retaining pin 136 then passes through an aperture in the outer height bar 133 and into right outer bracket 135. The height bar 133 can be raised or lowered by selecting an appropriate positioning hole 137. The outer point rest 85 is supported by the outer height bar 133. Consequently, by altering the positioning hole 137, the outer height bar 133 is raised or lowered which changes the height of the outer point 82 accordingly.

During routine harvesting operations, the outer point shield 81, the outer island shield 100 and their corresponding support assemblies are mounted in their lower, operating position illustrated by Figures 3 and 4. The outer latch 105 secures the outer island shield 100 and the outer island support assembly 102 to the outer bracket support 132. The height of the outer point 82 is determined by the position of the outer height bar 133 supporting the outer point rest 85.

For maintenance or transport of the corn header 2, the outer point shield 81 and outer island shield 100 can be raised as illustrated in Figure 5. To accomplish this, the outer latch 105 is released and the outer island shield 100 and the outer island support assembly 102 are raised and pivoted about the header frame hinge 104. The outer point 82 and its support assembly 83 are then raised and pivoted about the hinge 84. Then the outer point 82 is inserted into the outer point receptacle 106 in the outer island support assembly 102.

As shown in Figure 9, the inner divider assembly 40 comprises five major elements: the inner point shield 41, the inner point support assembly 44, the inner island shield 60, the inner island support assembly 61 and the inner height assembly 120.

The inner point shield 41 is a semi-conical shield located at the front of the inner divider assembly 40. The shield is rotationally moulded and is single walled. The shield has an inner point 43 which may be reinforced with a metal tip. There is an inner point shield channel 48 moulded into the shield 41 for receiving the inner point support assembly 44. The base 49 of the inner point shield 41 has an inner point rest 45 which is moulded into the shield for receiving thereon an inner height bar 121. Also attached to the inner point base 49 is an inner point prop 42, which is C-shaped and can rotate about pivots in the sides of the inner point shield 41. The prop 42 supports the inner point shield 41 so as to hold the inner point 43 in an upward position for maintenance or transport.

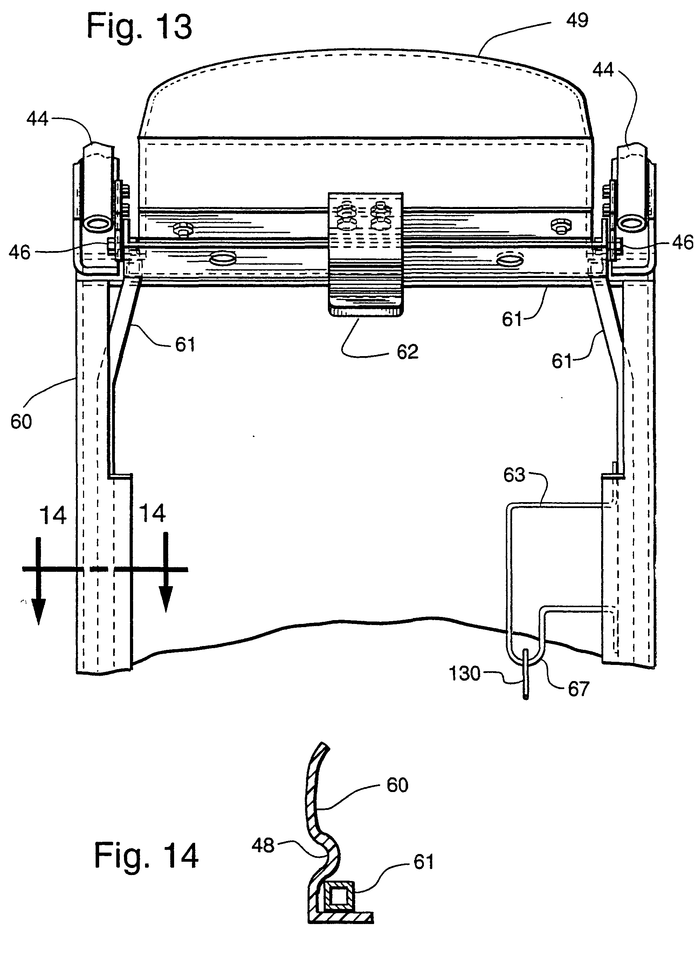

The inner point support assembly 44 comprises a triangularly shaped frame with a pair of hinges 46, connecting the support assembly 44 to the inner island support assembly 61 (Figure 13). Hence the inner point support assembly 44 is capable of pivoting relative to inner island support assembly 61. If desired, additional reinforcement may be added to the support assembly 44 and the inner point shield 41 to allow for operating in a very harsh environment.

The inner island shield 60 is located behind the inner point shield 41. The inner island shield 60 is made of rotationally moulded and single walled plastic. It has at its front end an elongated section 66, which nests partially inside the inner point base 49. The inner point prop 42 catches on the edge of the elongated section 66 to hold the inner point shield 41 and its support assembly 44 in an upward position during maintenance or transport. A pair of ear savers may be affixed behind the elongated section 66 to prevent corn from falling into the inner point base 49.

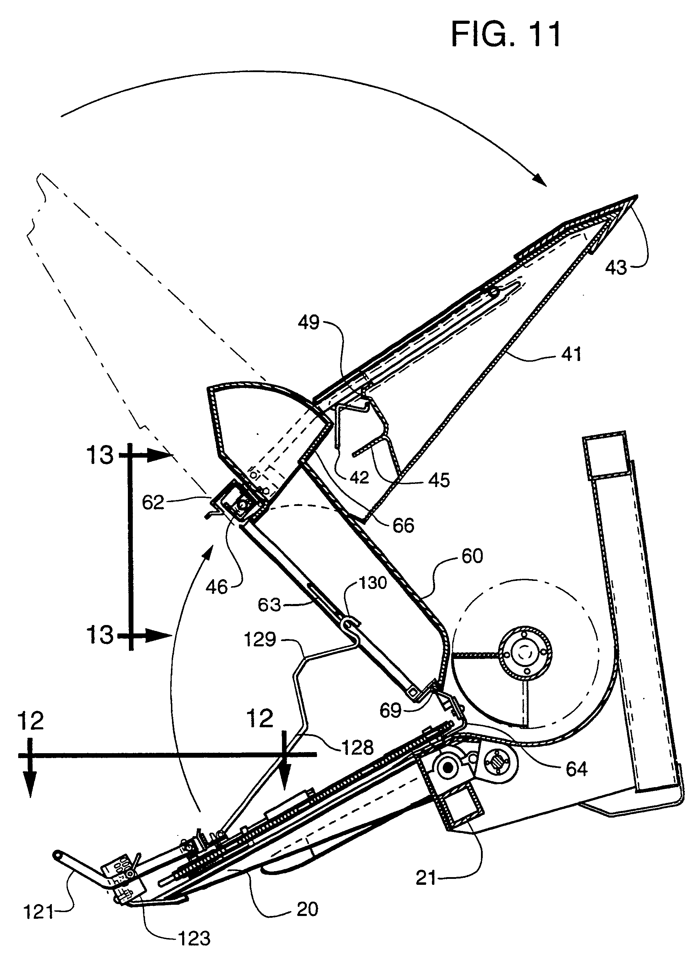

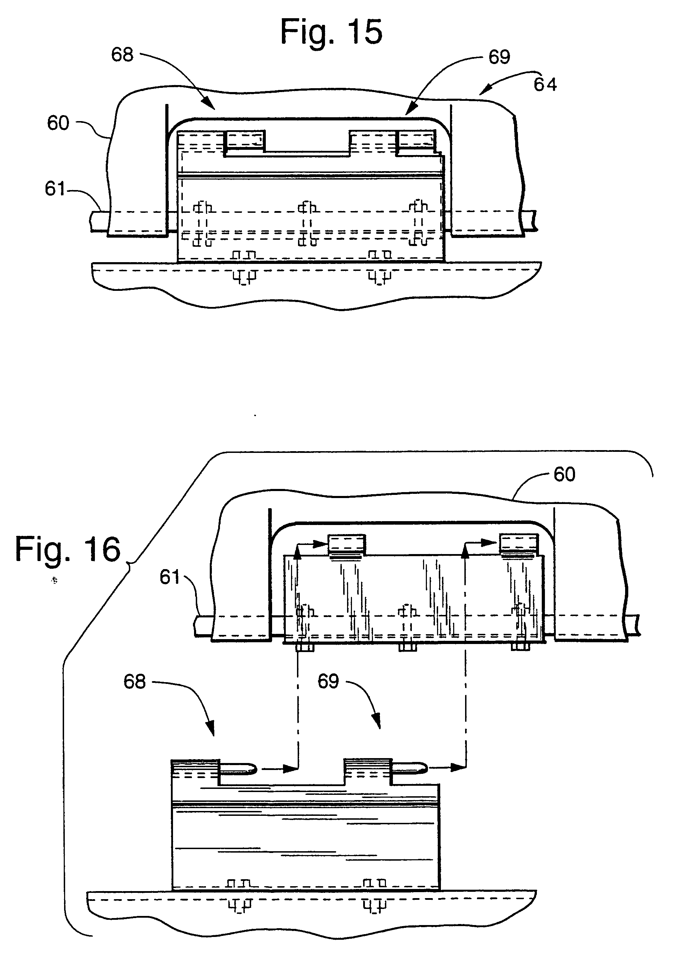

The inner island support assembly 61 is rectangularly shaped and supports the inner island shield 60. Affixed to the support assembly 61 is a prop support 63, which is approximately rectangular and comprises a prop catch 67 (Figure 13). Also affixed to the support assembly 61 is an inner latch 62. Furthermore a hinge assembly 64 is affixed to the inner island support assembly 61 (Figure 11). This hinge assembly 64 has left and right hinge pins 68 and 69 (as illustrated in Figure 15) connecting the hinge assembly 64 to the row unit frame 20 and enabling pivotment to this frame and the corn header 2. The hinge pins 68 and 69 are oriented in the same direction allowing removal of the inner point shield 41, the inner point support assembly 44, the inner island shield 60 and the inner island support assembly 61 by sliding the hinge assembly 64 off the hinge pins 68 and 69 as shown in Figure 16.

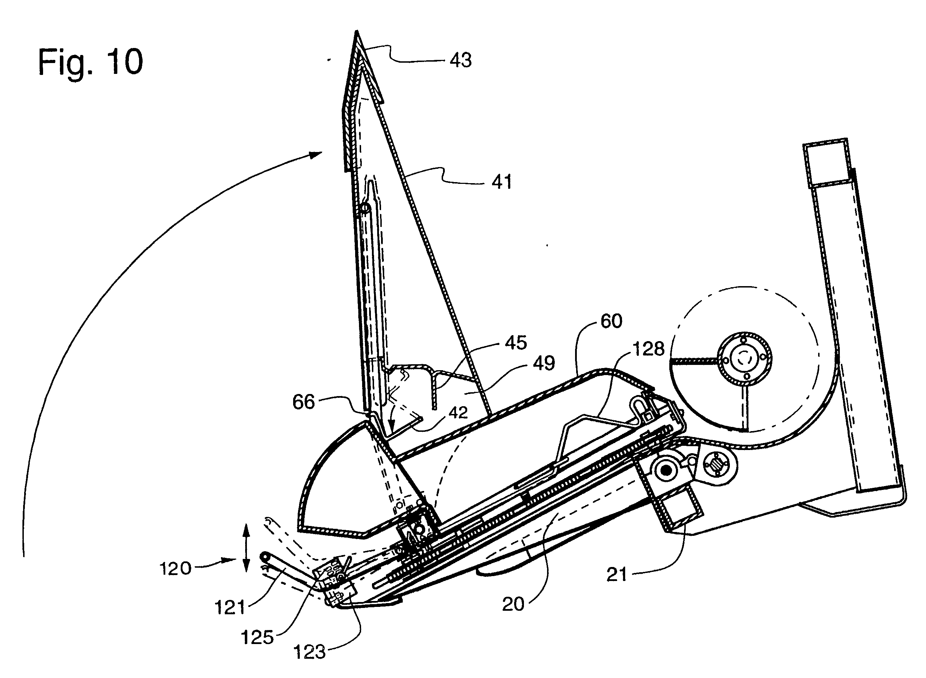

The inner height assembly 120 controls the height of the inner point 43. It can raise or lower the level of the inner point 43 relative to the ground (as indicated by the phantom lines in Figure 10). The inner height assembly 120 comprises a height bar support assembly 126, an inner latch catch 127, an inner prop 128, a pair of inner pivot pins 118 and 119, an inner height bar 121, a pair of inner brackets 122 and 123 and a pair of retaining pins 124.

The latch catch 127 is located near the centre of the height bar support assembly 126 and is used for receiving the inner latch 62 of the inner island support assembly 61. The inner prop 128 is pivotally affixed near the latch catch 127 and comprises a bend 129 and a prop catch 130 (Figure 11). Typically, the inner prop 128 is inserted through the prop support 63 of the inner island support assembly 61 shown in Figure 13. The prop catch 130 is inserted into the prop support catch 67 and supports the inner point shield 41, the inner point support assembly 44, the inner island shield 60 and the inner point support assembly 61 during maintenance. The bend 129 assists in the storage of the inner prop 128 when the shields and frames are lowered.

Each end of the inner height bar 121 is attached to one of the pivot pins 118, 119, which allows pivotment of the inner height bar 121 (Figure 12). The left and right inner brackets 122 and 123 are affixed to the row unit frame 20, forward of the inner height bar support assembly 126, and each has several position holes 125. The retaining pin 124 is inserted into a positioning hole 125 on the left inner bracket 122 and then into an aperture in the inner height bar 121. Another retaining pin 124 is inserted into the right inner bracket 123. The height bar 121 can be raised or lowered by selecting an appropriate positioning hole 125. The inner point rest 45 is supported by the inner height bar 121. Consequently, by altering the positioning hole 125 the inner height bar 121 may be raised or lowered for changing the height of the inner point 43.

While the corn header 2 is being used in routine harvesting operations, the inner point shield 41 and inner island shield 60 and corresponding support assemblies 44, 61 are in their lower position, illustrated in Figure 9. The inner latch 62 secures the inner island shield 60 and inner island support assembly 61 to the inner latch catch 127 on the inner height bar support assembly 126. The height of the inner point 43 is determined by the level of the inner height bar 121 which supports the inner point rest 45.

For maintenance or transport of the corn header 2, the inner point shield 41 and the inner island shield 60 can be raised and pivoted relative to the transverse beam 21. To accomplish this, the inner point shield 41 and its support assembly 44 are raised and the inner point prop 42 is rotated so as to contact the elongated section 66 of the inner island shield (as shown in Figure 10). Next the inner latch 62 is released and the inner island shield 60 and its support assembly 61 are raised. The prop catch 130 of the inner prop 128 may then be inserted into the prop catch 67 as illustrated in Figure 11. This will provide an unobstructed view of the corn header processing equipment.

Because the single walled plastic shields are supported by the support assemblies, the divider assemblies are considerably lighter than reinforced double walled plastic shields. This reduction in weight allows the inner point support assembly 44 to be hinged to the inner island support assembly 61 and not to directly to the row unit frame 20. This allows both support assemblies 44 and 61 to be rotated completely over the transverse beam 21 thereby exposing the processing equipment. The prior art dividers are too heavy to be rotated in such a manner.

The design of hinges 46 between the inner point support assembly 44 and the inner island support assembly 61 further assists the rotation of the inner point shield 41 and its support assembly 44. When the inner point shield 41 and its support assembly 44 are raised and propped, the centre of gravity of the inner divider assembly 40 shifts over the inner island shield 60 and its support assembly 61. Consequently, the inner island shield 60 and its support assembly 61 (and the propped inner point shield 41 and the support assembly 44) are easier to rotate than prior art dividers: the centre of gravity of the entire divider assembly 40 is located close to the transverse beam 21. Rotation around the hinge assembly 64 takes considerable less force than if the centre of gravity were located further from the transverse beam 21.

It will be obvious to those skilled in the art that various changes may be made without departing from the scope of the invention and the invention is not to be considered limited to what is illustrated in the drawings and described in the specification.

## Claims

1. A corn header (2) for a corn harvester (1), comprising:
a transverse beam (21) carrying a header frame (30) and a plurality of row units, each comprising a row unit frame (20); and
a divider assembly (40, 80) associated with said row units and comprising plastic shielding (41, 60, 81, 100) connected to said header frame (30) or to the frames (20) of said row units by pivot means (64, 84), thereby enabling pivotment of said shielding (41, 60, 81,100) between a lower, operating position and an upper, servicing position,
**characterized in that**
said plastic shielding (41, 60, 81, 100) is single walled and supported by support assemblies (44, 61, 83, 102) including said pivot means (64, 84).

2. A corn header according to claim 1, **characterized in that** said divider assembly (40, 80) further comprises means (120, 131) for adjusting the level of said lower, operating position of said shielding (41, 81).

3. A corn header according to claim 1 or 2, **characterized in that** said shielding comprises an inner point shield (41), an inner island shield (60), an outer point shield (81) and an outer island shield (100).

4. A corn header according to claim 3, **characterized in that** said support means (44, 61, 83, 102) comprise:
an inner point support assembly (44), supporting said inner point shield (41);
an inner island support assembly (61), supporting said inner island shield (60);
an outer point support assembly (83), supporting said outer point shield (81); and
an outer island support assembly (102), supporting said outer island shield (100).

5. A corn header according to claim 4, **characterized in that**:
said inner island support assembly (61) is pivotally connected to said row unit frame (20);
said inner point support assembly (44) is pivotally connected to the inner island support assembly (61), whereby the inner island shield (60) and the inner point shield (41) may be rotated over the transverse beam (21);
said outer island support assembly (102) is pivotally connected to the header frame (30); and
said outer point support assembly (83) is pivotally connected to the row unit.

6. A corn header according to claim 5, when appended to claim 2, **characterized in that** said level adjusting means (120, 131) comprise an inner height assembly (120) affixed to the row unit for adjusting the lower, operating position of the inner point shield (41).

7. A corn header according to claim 5, when appended to claim 2, **characterized in that** said level adjusting means (120, 131) comprise an outer height assembly (131) affixed to the row unit for adjusting the lower, operating position of the outer point shield (81).

8. A corn header according to any of the claims 4 to 7, **characterized in that** the inner point shield (41) comprises an inner point (43), an inner point shield base (49) and an inner point shield channel (48), said inner point shield channel (48) receiving the inner point support assembly (44).

9. A corn header according to claim 8, **characterized in that** the inner point shield base (49) has an inner point prop (42) and an inner point rest (45) for receiving an inner height bar (126).

10. A corn header according to claim 9, **characterized in that** the inner island support assembly (61) comprises a latch (62), a prop support (63) comprising a prop support catch (67), and a hinge assembly (64).

11. A corn header according to claim 10, when appended to claim 6, **characterized in that** the inner height assembly (120) comprises a height bar support assembly (126) with a latch catch (127), a prop (128), a height bar (121) mounted for pivotment about a pivot pin (118, 119), said height bar (121) being adjustable to an inner bracket (122/ 123), whereby the level of the inner point (43) can be adjusted.

12. A corn header according to claim 11, **characterized in that** said inner bracket (122/ 123) has a plurality of positioning holes therein for insertion of a retaining pin (124) for fixing the position of said height bar (121).

13. A corn header according to any of the claims 4 to 12, **characterized in that** the outer point shield (81) comprises an outer point (82), an outer point base (88) and an outer point shield channel (86), said outer point shield channel (86) receiving the outer point support assembly (83).

14. A corn header according to claim 13, **characterized in that** the outer point base (88) comprises an outer point rest (85) for receiving an outer height bar (133).

15. A corn header according to claim 14, **characterized in that** the outer island support assembly (102) comprises a header frame hinge (104), an outer latch (105) and an outer point receptacle (106) for receiving the outer point (82), when the outer point shield (81) is rotated upwardly.

16. A corn header according to claim 15, when appended to claim 7, **characterized in that** the outer height assembly (131) comprises an outer bracket support (132) with an outer height bar (133) mounted for pivotment about a pivot pin (138), said outer height bar (133) being adjustable to an outer bracket (134/ 135), whereby the level of the outer point (82) can be adjusted.

17. A corn header according to claim 16, **characterized in that** the outer bracket (134/ 135) has a plurality of positioning holes (137) therein for insertion of a retaining pin (136) for fixing the position of said outer height bar (133).

## Patentansprüche

1. Maisvorsatz (2) für eine Maiserntemaschine (1), mit:
einem Querträger (61), der einen Vorsatzgeräte-Rahmen (30) und eine Vielzahl von Reiheneinheiten trägt, die jeweils einen Reiheneinheit-Rahmen (20) umfassen, und
eine Teilerbaugruppe (40, 80), die den Reiheneinheiten zugeordnet ist und eine Kunststoffabdeckung (41, 60, 81, 100) aufweist, die mit dem Vorsatzgeräte-Rahmen (30) oder mit den Rahmen (20) der Reiheneinheiten durch Schwenkeinrichtungen (64, 84) verbunden ist, wodurch ein Verschwenken der Abdeckung (41, 60, 81, 100) zwischen einer unteren Betriebsstellung und einer oberen Wartungsstellung ermöglicht wird,
**dadurch gekennzeichnet, daß**:
die Kunststoffabdeckung (41, 60, 81, 100) einwandig ist und durch Halterungsbaugruppen (44, 61, 63, 102) gehaltert ist, die die Schwenkeinrichtungen (64, 84) einschließen.

2. Maisvorsatz nach Anspruch 1, **dadurch gekennzeichnet, daß** die Teilerbaugruppe (40, 80) weiterhin Einrichtungen (120, 131) zur Einstellung der Höhenlage der unteren Betriebsstellung der Abdeckung (41, 81) aufweist.

3. Maisvorsatz nach Anspruch 1 oder 2, **dadurch gekennzeichnet, daß** die Abdeckung eine innere Spitzen-Abdeckung (41), eine innere Insel-Abdeckung (60), eine äußere Spitzen-Abdeckung (81) und eine äußere Insel-Abdeckung (100) umfaßt.

4. Maisvorsatz nach Anspruch 3, **dadurch gekennzeichnet, daß** die Halterungseinrichtungen (44, 61, 83, 102) folgendes umfassen:
eine innere Spitzen-Halterungsbaugruppe (44), die die innere Spitzen-Abdeckung (41) haltert,
eine innere Insel-Halterungsbaugruppe (61), die die innere Insel-Abdeckung (60) haltert,
eine äußere Spitzen-Halterungsbaugruppe (83), die äußere Spitzen-Abdeckung (81) haltert, und
eine äußere Insel-Halterungsbaugruppe (102), die die äußere Insel-Abdeckung (100) haltert.

5. Maisvorsatz nach Anspruch 4, **dadurch gekennzeichnet, daß**:
die innere Insel-Halterungsbaugruppe (61) schwenkbar mit dem Reiheneinheit-Rahmen (20) verbunden ist,
die innere Spitzen-Halterungsbaugruppe (44) schwenkbar mit der inneren Insel-Halterungsbaugruppe (61) verbunden ist, wodurch die innere Insel-Abdeckung (60) und die innere Spitzen-Abdeckung (41) über den Querträger (21) verschwenkt werden können,
die äußere Insel-Halterungsbaugruppe (102) schwenkbar mit dem Vorsatzgeräte-Rahmen (30) verbunden ist, und
die äußere Spitzen-Halterungsbaugruppe (83) schwenkbar mit der Reiheneinheit verbunden ist.

6. Maisvorsatz nach Anspruch 5 unter Rückbeziehung auf Anspruch 2, **dadurch gekennzeichnet, daß** die Höhenlage-Einstelleinrichtungen (120, 131) eine innere Höhenbaugruppe (120) umfassen, die an der Reiheneinheit zur Einstellung der unteren Betriebsstellung der inneren Spitzen-Abdeckung (41) befestigt ist.

7. Maisvorsatz nach Anspruch 5 unter Rückbeziehung auf Anspruch 2, **dadurch gekennzeichnet, daß** die Höhenlage-Einstelleinrichtungen (120, 131) eine äußere Höhenbaugruppe (131) umfassen, die an der Reiheneinheit befestigt ist, um die untere Betriebsstellung der äußeren Spitzen-Abdeckung (81) einzustellen.

8. Maisvorsatz nach einem der Ansprüche 4-7, **dadurch gekennzeichnet, daß** die innere Spitzen-Abdeckung (41) eine innere Spitze (43), eine innere Spitzen-Abdeckungs-Basis (49) und einen inneren Spitzen-Abdeckungs-Kanal (48) umfaßt, wobei der innere Spitzen-Abdeckungs-Kanal (48) die innere Spitzen-Halterungsbaugruppe (44) aufnimmt.

9. Maisvorsatz nach Anspruch 8, **dadurch gekennzeichnet, daß** die innere Spitzen-Abdeckungs-Basis (49) eine innere Spitzenstütze (42) und eine innere Spitzenauflage (45) zur Aufnahme einer inneren Höhenstange (126) aufweist.

10. Maisvorsatz nach Anspruch 9, **dadurch gekennzeichnet, daß** die innere Insel-Halterungsbaugruppe (61) einen Riegel (62), eine Stützen-Halterung (63) mit einem Stützenhalterungs-Riegel (67) und eine Scharnierbaugruppe (64) umfaßt.

11. Maisvorsatz nach Anspruch 10 unter Rückbeziehung auf Anspruch 6, **dadurch gekennzeichnet, daß** die innere Höhenbaugruppe (120) eine Höhenstangen-Halterungsbaugruppe (126) mit einem Fangriegel (127), eine Stütze (128) und eine Höhenstange (121) umfaßt, die für ein Verschwenken um einen Schwenkbolzen (118, 119) befestigt ist, wobei die Höhenstange (121) an einem inneren Bügel (122/123) einstellbar ist, wodurch die Höhenlage der inneren Spitze (43) einstellbar ist.

12. Maisvorsatz nach Anspruch 11, **dadurch gekennzeichnet, daß** der innere Bügel (122/123) eine Vielzahl von darin ausgebildeten Positionierbohrungen für das Einsetzen eines Haltebolzens (124) zur Festlegung der Position der Höhenstange (121) aufweist.

13. Maisvorsatz nach einem der Ansprüche 4-12, **dadurch gekennzeichnet, daß** die äußere Spitzen-Abdeckung (81) eine äußere Spitze (82), eine äußere Spitzen-Basis (88) und einen äußeren Spitzen-Abdeckungs-Kanal (86) aufweist, wobei der äußere Spitzen-Abdeckungs-Kanal (86) die äußere Spitzen-Halterungsbaugruppe (83) aufnimmt.

14. Maisvorsatz nach Anspruch 13, **dadurch gekennzeichnet, daß** die äußere Spitzenbasis (88) eine äußere Spitzenauflage (85) zur Aufnahme einer äußeren Höhenstange (133) aufweist.

15. Maisvorsatz nach Anspruch 14, **dadurch gekennzeichnet, daß** die äußere Insel-Halterungsbaugruppe (102) ein Vorsatzrahmen-Scharnier (104), einen äußeren Riegel (105) und eine äußere Spitzenaufnahme (106) zur Aufnahme der äußeren Spitze (82) aufweist, wenn die äußere Spitzen-Abdeckung (81) nach oben gedreht ist.

16. Maisvorsatz nach Anspruch 15, unter Rückbeziehung auf Anspruch 7, **dadurch gekennzeichnet, daß** die äußere Höhenbaugruppe (131) eine äußere Bügelhalterung (132) mit einer äußeren Höhenstange (133) aufweist, die für ein Verschwenken um einen Schwenkzapfen (138) befestigt ist, wobei die äußere Höhenstange (133) gegenüber einem äußeren Bügel (134/135) einstellbar ist, wodurch die Höhenlage der äußeren Spitze (82) einstellbar ist.

17. Maisvorsatz nach Anspruch 16, **dadurch gekennzeichnet, daß** der äußere Bügel (134/135) eine Vielzahl von darin ausgebildeten Positionierbohrungen (137) zum Einsetzen eines Haltebolzens (136) zur Festlegung der Position der äußeren Höhenstange (133) aufweist.

## Revendications

1. Récolteur (2) à maïs destiné à une moissonneuse à maïs (1), comprenant:
une poutre transversale (21) soutenant un châssis de récolteur (30) et une pluralité d'unités de rangs, comprenant chacune un châssis d'unité de rangs (20); et
un assemblage de diviseur (40, 80) associé auxdites unités de rangs et comprenant un écran en plastique (41, 60, 81, 100) relié audit châssis de récolteur (30) ou aux châssis (20) desdites unités de rangs par moyens de pivotement (64, 80), permettant ainsi le pivotement dudit écran (41, 60, 81, 100) entre une position inférieure de fonctionnement et une position supérieure d'entretien,
**caractérisé en ce que**
ledit écran en plastique (41, 60, 81, 100) est à simple paroi et est soutenu par des assemblages de support (44, 61, 83, 102) comprenant lesdits moyens de pivotement (64, 80).

2. Récolteur à maïs selon la revendication 1, **caractérisé en ce que** ledit assemblage de diviseur (40, 80) comprend en outre des moyens (120, 131) pour ajuster le niveau de ladite position inférieure de fonctionnement dudit écran (41, 81).

3. Récolteur à maïs selon la revendication 1 ou 2, **caractérisé en ce que** ledit écran comprend un écran de pointe intérieur (41), un écran d'îlot intérieur (60), un écran de pointe extérieure (81) et un écran d'îlot extérieur (100).

4. Récolteur à maïs selon la revendication 3, **caractérisé en ce que** lesdits assemblages de support (44, 61, 83, 102) comprennent:
un assemblage de support de pointe intérieure (44), soutenant ledit écran de pointe intérieure (41);
un assemblage de support d'îlot intérieur (1), soutenant ledit écran d'îlot intérieur (60);
un assemblage de support de pointe extérieure (83), soutenant ledit écran de pointe extérieure (81); et
un assemblage de support d'îlot extérieur (102), soutenant ledit écran d'îlot extérieur (100).

5. Récolteur à maïs selon la revendication 4, **caractérisé en ce que**:
ledit assemblage de support d'îlot intérieur (61) est relié avec pivotement audit châssis d'unité de rangs (20) ;
ledit assemblage de support de pointe intérieure (44) est relié avec pivotement à l'assemblage de support d'îlot intérieur (61), de sorte que l'écran d'îlot intérieur (60) et l'écran de pointe intérieure (41) peuvent être pivotés sur la poutre transversale (21);
ledit assemblage de support d'îlot extérieur (102) est relié avec pivotement au châssis de récolteur (30); et
ledit assemblage de support de pointe extérieure (83) est relié avec pivotement à l'unité de rangs.

6. Récolteur à maïs selon la revendication 5, lorsqu'elle se rapporte à la revendication 2, **caractérisé en ce que** lesdits moyens d'ajustement de niveau (120, 131) comprennent un assemblage intérieur de réglage de hauteur (120) fixé à l'unité de rangs afin d'ajuster la position inférieure de fonctionnement de l'écran de pointe intérieure (41).

7. Récolteur à maïs selon la revendication 5, lorsqu'elle se rapporte à la revendication 2, **caractérisé en ce que** lesdits moyens d'ajustement de niveau (120, 131) comprennent un assemblage extérieur de réglage de hauteur (131) fixé à l'unité de rangs pour ajuster la position inférieure de fonctionnement de l'écran de pointe extérieure (81).

8. Récolteur à maïs selon l'une quelconque des revendications 4 à 7, **caractérisé en ce que** l'écran de pointe intérieure (41) comprend une pointe intérieure (43), une base d'écran de pointe intérieure (49) et un canal d'écran de pointe intérieure (48), ledit canal d'écran de pointe intérieure (48) accueillant l'assemblage de support de pointe intérieure (44).

9. Récolteur à maïs selon la revendication 8, **caractérisé en ce que** la base d'écran de pointe intérieure (49) possède un soutènement de pointe intérieure (42) et un appui de pointe intérieure (45) destiné à accueillir une barre intérieure de réglage de hauteur (126).

10. Récolteur à maïs selon la revendication 9, **caractérisé en ce que** l'assemblage de support d'îlot intérieur (61) comprend un verrouillage (62), un support de soutènement (63) comprenant un arrêt de support de soutènement (67), et un assemblage de charnière (64).

11. Récolteur à maïs selon la revendication 10, lorsqu'elle se rapporte à la revendication 6, **caractérisé en ce que** l'assemblage intérieur de réglage de hauteur (120) comprend un assemblage de support de barre de réglage de hauteur (126) muni d'un arrêt de verrouillage (127), d'un soutènement (128), d'une barre de réglage de hauteur (121) montée avec pivotement autour d'un pivot (118, 119), ladite barre de réglage de hauteur étant ajustable par rapport à une patte d'attache intérieure (122 / 133), de manière à pouvoir ajuster le niveau de la pointe intérieure (43).

12. Récolteur à maïs selon la revendication 11, **caractérisé en ce que** ladite patte d'attache intérieure (122 / 123) possède une pluralité de trous de positionnement en son sein pour l'introduction d'une broche de retenue (124) destinée à fixer la position de ladite barre de réglage de hauteur (121).

13. Récolteur à maïs selon l'une quelconque des revendications 4 à 12, **caractérisé en ce que** l'écran de pointe extérieure (81) comprend une pointe extérieure (82), une base de pointe extérieure (88) et un canal d'écran de pointe extérieure (86), ledit canal d'écran de pointe extérieure (86) accueillant l'assemblage de support de pointe extérieure (83).

14. Récolteur à maïs selon la revendication 13, **caractérisé en ce que** la base de pointe extérieure (88) comprend un appui de pointe extérieure (85) destiné à accueillir une barre extérieure de réglage de hauteur (133).

15. Récolteur à maïs selon la revendication 14, **caractérisé en ce que** l'assemblage de support d'îlot extérieur (102) comprend une charnière de châssis de récolteur (104), un verrouillage extérieur (105) et un siège de pointe extérieure (106) destiné à accueillir la pointe extérieure (82), lorsque l'écran de pointe extérieure (81) est pivoté vers le haut.

16. Récolteur à maïs selon la revendication 15, lorsqu'elle se rapporte à la revendication 7, **caractérisé en ce que** l'assemblage extérieur de réglage de hauteur (131) comprend un support de patte d'attache extérieure (133) monté avec pivotement autour d'un pivot (138), ladite barre extérieure de réglage de hauteur (133) étant ajustable par rapport à une patte d'attache extérieure (134 / 135), de manière à pouvoir ajuster le niveau de la pointe extérieure (82).

17. Récolteur à maïs selon la revendication 16, **caractérisé en ce que** la patte d'attache extérieure (134 / 135) possède une pluralité de trous de positionnement (137) en son sein pour l'introduction d'une broche de retenue (136) destinée à fixer la position de ladite barre extérieure de réglage de hauteur (133).
